# EUROPÄISCHE PATENTSCHRIFT

(11) **EP 0 593 025 B1**
(45) Veröffentlichungstag und Bekanntmachung des Hinweises auf die Patenterteilung: **23.07.1997**
(21) Anmeldenummer: 93116531.0
(22) Anmeldetag: 13.10.1993
(51) Int. Cl.: G01G 13/00

(54) **Verwiegevorrichtung für Schüttgüter mit trichterförmigem Wiegebehälter**
Weighing device with a funnel-shaped weighing container for weighing bulk material
Dispositif de pesage pour matériaux en vrac avec réservoir de pesage sous forme de trémie

(30) Priorität: 16.10.1992 DE 4234934; 29.10.1992 DE 4236501
(43) Veröffentlichungstag der Anmeldung: 20.04.1994
(73) Patentinhaber: FRIEDRICH THEYSOHN GmbH, D-32547 Bad Oeynhausen (DE)
(72) Erfinder: Klose, Reinhard, 31737 Rinteln (DE); Krüger, Ernst Dr., 49124 Georgsmarienhütte (DE); Michels, Rolf, 32547 Bad Oeynhausen (DE)
(74) Vertreter: Cohausz & Florack Patentanwälte

(56) Entgegenhaltungen:
- DE-A- 2 704 138
- DE-A- 3 015 963
- DE-U- 9 201 605

## Beschreibung

Die Erfindung bezieht sich auf eine Verwiegevorrichtung für Schüttgüter mit einem einen zentrischen Materialeinlauf aufweisenden, trichterförmigen Wiegebehälter, der mittels eines Tragarms von einer asymmetrisch zum Wiegebehälter angeordneten Biegemeßzelle für asymmetrische Lasten getragen ist, wobei der Tragarm als Gabel ausgebildet ist, in deren Gabelästen der Wiegebehälter oberhalb seines Schwerpunktes an diametral gegenüberliegenden Seiten pendelnd aufgehängt ist.

Solche Verwiegevorrichtungen werden einer Verarbeitungsmaschine für das Schüttgut, zum Beispiel einem Extruder, vorgeschaltet, um den Massendurchsatz zu ermitteln und unter Berücksichtigung des Massendurchsatzes anhand von Meßwerten für ein aus dem Schüttgut hergestelltes Produkt Aussagen über das Produkt, zum Beispiel bei einem Rohr über dessen Wandstärke, machen zu können. Dabei ist es wichtig, in möglichst kleinen Zeitabständen eine Aussage über die Menge des aus dem Wiegebehälter ausgetragenen Schüttgutes zu machen. Je kleiner die zeitlichen Abstände der Messungen über die ausgetragene Schüttmenge sind, desto schwieriger ist es, zu Fehlmessungen führende Einflußfaktoren auszuschalten. Mögliche, das Meßergebnis verfälschende Einflußfaktoren sind eine unsymmetrische Nachfüllung des Behälters mit Schüttgut oder ein asymmetrischer Abfluß des Schüttgutes aus dem Behälter.

Um diese Einflußfaktoren möglichst klein zu halten, hat man Wiegebehälter eingesetzt, die einen zentralen Auslauf und einen zentralen Einlauf haben. Bei einem bekannten Behälter der eingangs genannten Art (EP 0 246 289 B1) sind keine besonderen Vorkehrungen für die Biegemeßzelle am Tragarm der Gabel vorgesehen. Deshalb sind die Bedingungen für eine möglichst fehlerfreie Messung mittels der Biegemeßzelle nicht gewährleistet.

Bei einer anderen bekannten Verwiegevorrichtung der eingangs genannten Art (DE-GM 92 01 605.7) ist der apparative Aufwand verhältnismäßig gering, weil bei ihm nur eine Biegemeßzelle für asymmetrische Lasten vorgesehen ist. Bei einer solchen Verwiegevorrichtung ist der Behälter unterhalb seines Schwerpunktes im trichterförmigen Unterteil in einem ringförmigen Rahmen eines Tragarms gehalten. Ein solcher Behälter läßt sich verhältnismäßig leicht ausbauen und ist wegen der oberhalb des Behälters fehlenden Tragkonstruktion zwar zentrisch mit Schüttgut zu füllen, doch ist der Kraftangriff des Tragarms im unteren trichterförmigen Bereich des Behälters bezüglich dynamischer Meßwertverfälschungen problematisch. Es wurde nämlich gefunden, daß auch bei der Möglichkeit, den Behälter zentrisch zu füllen, nie gesichert ist, daß der Zustrom von Schüttgütern aus einem vorgeordneten Vorratsbehälter auch zentrisch erfolgt. Erst recht kann selbst bei einem symmetrischen Materialauslauf nicht gewährleistet werden, daß das Material auch symmetrisch abfließt. Das hat zur Folge, daß sich während des Füllvorganges oder während des Abzuges von Material der Schwerpunkt aus dem Zentrum verlagert. Das hat wiederum Pendelbewegungen zur Folge, bei denen dynamische Kräfte wirken, die gemeinsam mit dem Gewicht des Behälters die Biegemeßzelle belasten. Bei in sehr kurzen Zeitabstanden erfolgenden Messungen führen die dynamischen Kräfte zu beachtlichen Fehlern.

Der Erfindung liegt die Aufgabe zugrunde, eine Verwiegevorrichtung der eingangs genannten Art zu schaffen, bei der der Wiegebehälter nicht nur leicht ausbaubar sein soll, sondern auch der Einfluß dynamischer Fehler beim Wiegen möglichst gering sein soll.

Diese Aufgabe wird erfindungsgemäß dadurch gelöst, daß im Stiel der Gabel ein um die Stielachse wirksames Drehgelenk angeordnet ist.

Bei dem erfindungsgemäßen Behälter ergeben sich keine Meßfehler, weil die Biegemeßzelle wegen des Drehgelenkes im Stiel nur um eine Biegeachse belastet wird. Die pendelnde Aufhängung des Wiegebehälters in der Gabel und das Drehgelenk im Stiel der Gabel bilden nämlich für den Wiegebehälter eine kardanische Aufhängung, die die Biegemeßzelle von Belastungen in verschiedenen Achsen freihält. Die auch schon beim gattungsbildenden Stand der Technik wirksamen Vorteile, daß die aufgrund von Pendelbewegungen auftretenden dynamischen Fehler schnell abklingen, weil die Aufhängung des Behälters oberhalb des Schwerpunktes die Kraftkomponenten aus den dynamischen Schwingungen immer in Richtung der Schwerachse zeigen, sind auch dem erfindungsgemäßen Behälter zu eigen.

Nach einer Ausgestaltung der Erfindung ist die Meßzelle an der Anschlußseite des Tragarms in einer Überlastsicherung mit allseitigem Spiel eingesetzt.

Zum Schutz gegen mechanische Beschädigung ist es von Vorteil, wenn das Meßorgan der Biegemeßzelle für asymmetrische Lasten in einer silikonartigen Masse vergossen ist.

Im folgenden wird die Erfindung anhand einer ein Ausführungsbeispiel darstellenden Zeichnung näher erläutert.

An einer Tragsäule 1 ist mit einem Ende eine an sich bekannte Biegemeßzelle für asymmetrische Lasten 2 befestigt. Diese Biegemeßzelle 2 hat eine Quaderform. An ihrem anderen Ende ist ein als Gabel 3 ausgebildeter Tragarm befestigt. Die Biegemeßzelle 2 steckt mit einem Ansatz an ihrem Ende, das die Gabel 3 trägt, in einem von der Säule 1 getragenen Fenster 4 einer Überlastsicherung. Mit an allen Seiten angeordneten Einstellschrauben 5a bis 5d läßt sich das Spiel der Biegemeßzelle 2 einstellen.

In den Gabelästen 3a der Gabel 3 ist ein trichterförmiger Wiegebehälter 6 pendelnd aufgehängt. Dazu sind oberhalb des Behälterschwerpunktes an diametral gegenüberliegenden Seiten eines als Stutzen ausgebildeten Einlaufs 6a Zapfen 6a' befestigt. Zum Zwecke der pendelnden Bewegung um eine zur Pendelachse in den Gabelästen 3a senkrechte Achse ist im Gabelstiel 3b ein Drehgelenk 3b'eingebaut.

Der Behälter 6 mündet mit einem zentrischen Auslauf 6b in einen Füllstutzen 7 einer nicht weiter dargestellten Verarbeitungsmaschine für Schüttgut. Ein Tuch 6c verhindert, daß Staub bei einem Materialaustrag nach außen austritt. Oberhalb des Einlaufs 6a ist ein Nachfüllbehälter 8 angeordnet, der auf einer Tragplatte 9 montiert ist, die von der Säule 1 getragen wird. Der Behälter 8 weist einen unteren Auslauf 10 auf, der mit nicht näher dargestellten Verschlußorganen absperrbar ist. Auch hier kann ein abdeckendes Tuch oder dergleichen 11 verhindern, daß Staub beim Einfüllen von Schüttgut in den Behälter 6 nach außen gelangt.

Die besonderen Vorteile der erfindungsgemäßen Verwiegevorrichtung bestehen somit in der pendelnden Aufhängung des Behälters um zwei senkrechte Achsen, der leichten Auswechselbarkeit des Behälters, dem minimalen Aufwand für die Wägung in Form einer einzigen Biegemeßzelle, dem zentrischen Einlauf und nicht zuletzt der selbsttätigen, zwangsweisen Reduzierung dynamischer, die Meßwerte für das Gewicht verfälschender Einflüsse.

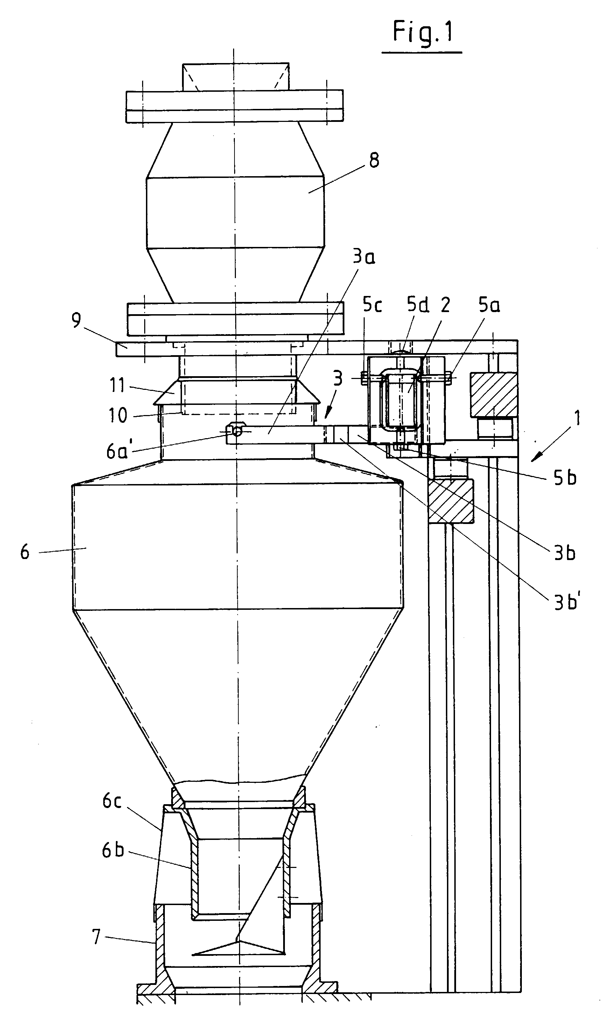

## Patentansprüche

1. Verwiegevorrichtung für Schüttgüter mit einem einen zentrischen Ein- und Auslauf aufweisenden, trichterförmigen Wiegebehälter (6), der mittels eines Tragarms (3) von einer asymmetrisch zum Wiegebehälter (6) angeordneten Biegemeßzelle (2) für asymmetrische Lasten getragen ist, wobei der Tragarm (3) als Gabel ausgebildet ist, in deren Gabelästen (3a) der Wiegebehälter (6) oberhalb seines Schwerpunktes an diametral gegenüberliegenden Seiten pendelnd aufgehängt ist,
**dadurch gekennzeichnet,** daß im Stiel (3b) der Gabel ein um die Stielachse wirksames Drehgelenk (3b') angeordnet ist.

2. Verwiegevorrichtung nach Anspruch 1,
**dadurch gekennzeichnet**, daß die Biegemeßzelle (2) an der Anschlußseite des Tragarms (3) in einer Überlastsicherung mit allseitigem Spiel steckt.

3. Verwiegevorrichtung nach Anspruch 1 oder 2,
**dadurch gekennzeichnet,** daß das das Meßorgan der Biegemeßzelle für asymmetrische Lasten in einer silikonartigen Masse vergossen ist.

## Claims

1. A weighing apparatus for bulk materials, having a funnel-shaped weighing tank (6) having a central inlet and outlet and borne via a supporting arm (3) by a bending measuring cell (2) for asymmetrical loads which is disposed asymmetrically of the weighing tank (6), the supporting arm (3) taking the form of a fork in whose arms (3a) the weighing tank (6) is pendulously suspended above its centre of gravity on diametrically opposite sides, characterized in that disposed in the stem (3b) of the fork is a swivel joint (3b') operative around the stem axis.

2. A weighing apparatus according to claim 1, characterized in that on the connection side of the supporting arm (3) the bendinq measuring cell (2) is inserted with clearance on all sides in an overload safety device.

3. A weighing apparatus according to claims 1 or 2,
characterized in that the measuring member of the bending measuring cell for asymmetrical loads is encapsulated in a silicone-like substance.

## Revendications

1. Dispositif de pesée pour produits en vrac, comprenant un récipient de pesée (6) en forme de trémie qui comporte une entrée axiale et une sortie axiale, et qui est porté, au moyen d'un bras de support (3), par une cellule (2) de mesure de flexion pour charges asymétriques, disposée de manière asymétrique par rapport au récipient de pesée (6), le bras de support (3) formant une fourche, le récipient de mesure (6) étant suspendu dans les branches (3a) de la fourche, à la manière d'une pendule, au-dessus de son centre de gravité, par des côtés diamétralement opposés, caractérisé en ce que dans l'âme (3b) de la fourche est disposée une articulation (3b') rotative autour de l'axe de cette âme.

2. Dispositif de pesée suivant la revendication 1, caractérisé en ce que la cellule de mesure de flexion (2), sur son côté reliée au bras de support(3), est fixée, avec un jeu de tous côtés, dans un dispositif de sécurité contre les surcharges.

3. Dispositif de pesée suivant la revendication 1 ou 2, caractérisé en ce que l'organe de mesure de la cellule de mesure de flexion pour charges asymétriques est coulé dans une masse type silicone.
